# EUROPEAN PATENT SPECIFICATION

(11) **EP 3 067 265 B1**
(45) Date of publication and mention of the grant of the patent: **20.11.2019**
(21) Application number: 15159098.1
(22) Date of filing: 13.03.2015
(51) Int. Cl.: B62M 11/16, B62M 11/14

(54) **Control assembly of an internal clutch**
Steuerungsanordnung einer internen Kupplung
Ensemble de commande d'un embrayage interne

(43) Date of publication of application: 14.09.2016
(73) Proprietor: NEW KAILUNG GEAR CO., LTD., Kaohsiung (TW)
(72) Inventor: LIU, Jen-Chih, Kaohsiung (TW)
(74) Representative: Treeby, Philip David William

(56) References cited:
- JP-A- H0 565 094
- US-A- 5 445 573
- US-A- 5 556 354
- US-A- 5 882 274
- US-B1- 6 267 704
- US-B1- 6 383 111

## Description

### FIELD OF THE INVENTION

The present invention relates to an internal clutch of a bike, and in particular to a control assembly of an internal clutch, wherein By power rotating components (such as input rings, inner gears planet frames, output rings, etc.) which rotates as the internal clutch and cam or cam-like component, clutching components are controlled. That is, using a cam or cam-like components to drive a driven device to rotate or displace so as to control the clutch to change gears.

### BACKGROUND OF THE INVENTION

The control mechanism of an internal clutch of a bicycle is complex and thus is heavy, large volume, and expensive. Meanwhile, it is insensitive in operation so as to deteriorate the quality of the clutch and the bicycle. Therefore, it is eager to develop and improve the prior art internal clutch of a bicycle.

Other than the designs of gears and paths of the internal clutch, to improve the driving rods and other structural elements of the internal clutches has related to the structures, weights and costs, and sensitivity and preciseness in controlling and the speed of change gears. Therefore, there is an eager demands to have an internal clutch with a the simple structures, light weights and low costs, and high sensitivity, high preciseness in controlling, fast speed in changing gears. The closest prior art document US 6 383 111 B1 discloses a control assembly according to the preamble of claims 1 or 2.

### SUMMARY OF THE INVENTION

The present invention relates to bikes, and in particular to a control assembly of an internal clutch, in that the internal clutch is commonly used to chainless bikes and chain contained bikes; has the advantages of saving storage space, light weight, low cost, high usages in industry. Furthermore the structure of the internal clutch is simple so that the efficiencies in assembly and repair are promoted. In the present invention by power rotating components (such as input rings, inner gears planet frames, output rings, etc.) which rotates as the internal clutch and cam or cam-like component, clutching components are controlled, such as to control the fixing of a sun gear, to control the engagements of the internal gear and planet gear. That is, using a cam or cam-like components to drive a driven device to rotate or displace so as to control the clutch to change gears

According to the present invention there is provided a control assembly of an internal clutch comprising: a first control unit for controlling the fixedness of a sun gear; a second control unit for controlling engagements of inner gears at two sides and a planet frame; a third control unit for controlling the sun gear or the inner gears and the planet frame; and wherein power for control units are from rotary dynamic components, by displacements of driving rods for controlling operations of a cam or cam-like component; by using the cam or cam-like unit to function clutch or by using the cam or cam-like unit to drive a driven device to rotate or displace for operation of the clutch, characterized by the first control unit is an axial clutching control unit and further comprising: a center shaft having at least one guide recess for receiving a clutching driving rod; an actuating sliding seat installed outside the center shaft; a surface of the sliding seat being installed with a left gear, a ratchet ring and a right gear; the ratchet gear ring being installed between the left gear and the right gear; between the left gear and the center shaft being installed with a left spring base, a left sliding block returning spring and a left actuating sliding block which is resisted by the sliding block returning spring and is controlled by the cam base; and between the right gear and the center shaft being installed with a right spring base, a right sliding block returning spring and a right actuating sliding block which is resisted by the sliding block returning spring and is controlled by the cam base.

In order that the present invention be more readily understood specific embodiments thereof will now be described.

### BRIEF DESCRIPTION OF DRAWINGS

Fig. 1 is a cross sectional view about an internal clutch for a bike of the present invention.
Fig. 2 is a cross sectional view that a sun gear is fixed to or freely displacement with respect to the axial clutching control unit.
Fig. 3 is a cross sectional view about the axial separation control unit of Fig. 2.
Fig. 4 is a cross sectional view showing that a sun gear is fixed to or freely displacement with respect to the axial clutching control unit.
Fig. 5 is a schematic view showing the action of the claws of the radial separation control unit of Fig. 4.
Fig. 6 is a schematic view showing the claw operation for controlling the fixedness of the sun gear.
Fig. 7 is a cross sectional showing the control unit for the inner gears at two sides and the planet frame according to the present invention.
Fig. 8 is a schematic view showing the closing operation about the clutching claw.
Fig. 9 is a cross sectional view showing a embodiment, in that a control claw of a control unit is positioned on a fixing unit.
Fig. 10 is a schematic view about the operation of the clutching claw of Fig. 9.
Fig. 11 is a cross sectional view showing an embodiment of the present invention, in that a control unit is used to a axial clutching operation.
Fig. 12 is a cross sectional view showing an embodiment of the present invention, in that a control unit is used to a radial clutching operation.

### BRIEF DESCRIPTION OF THE INVENTION

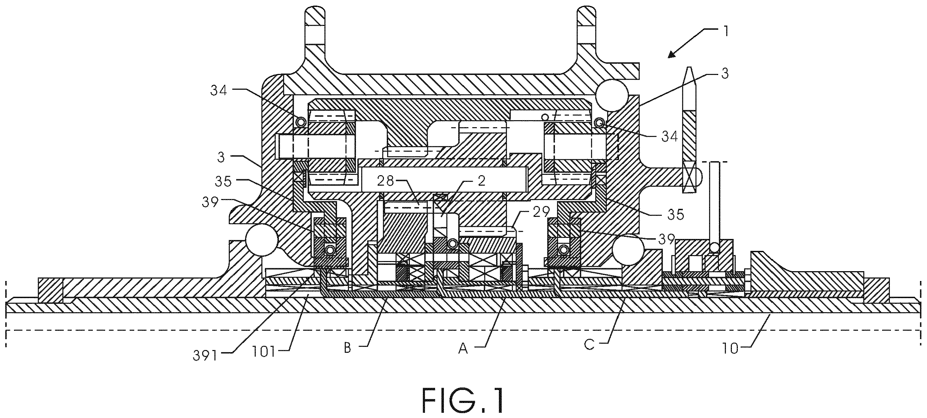

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims. With reference to Fig. 1, a control assembly of an internal clutch according to the present invention is illustrated. In the embodiment the control assembly includes a first control unit for controlling the fixedness of a sun gear; a second control unit for controlling the engagements of inner gears at two sides and a planet frame for locating a planet gear set; and a third control unit for widely controlling the sun gear or the inner gears and the planet frame. The main feature of the present invention is that the power of control units are mainly from rotary dynamic components of the clutch (such as input rings, inner gears, planet frames, output rings, etc.) by displacements of driving rods (including leftward and rightward displacements, upward and backward displacements, or angular displacements, etc. In the following, leftward and rightward displacements are used in the description of the present invention, but this is not used to confine the scope of the present invention) for controlling the operation of a cam or cam-like component). Further a cam or a cam-like unit is used to drive the clutch components or the cam or cam-like unit is used to drive a driven device to rotate or displace for operation a clutching device.

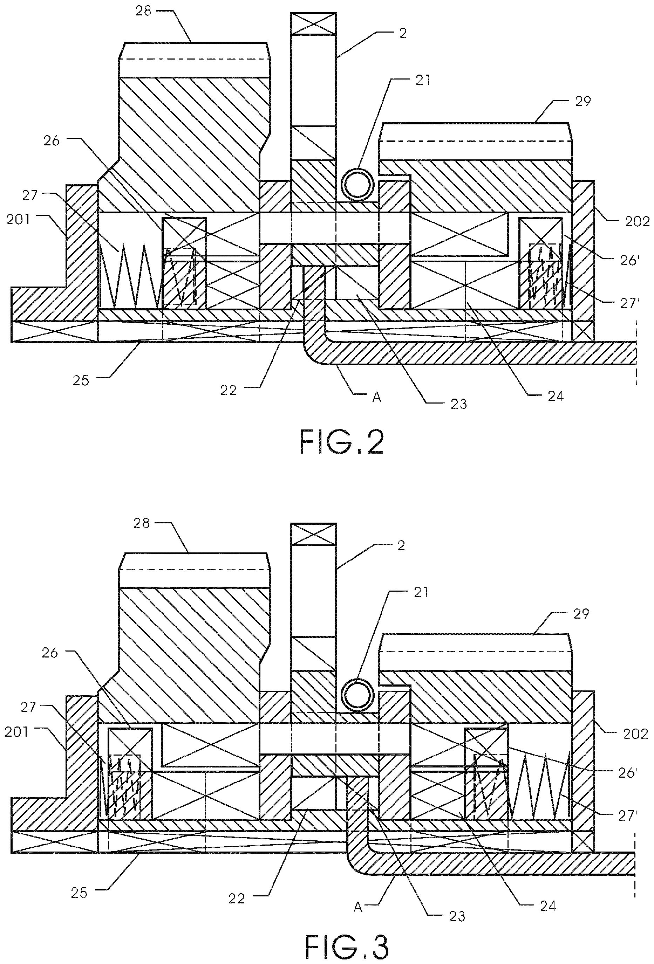

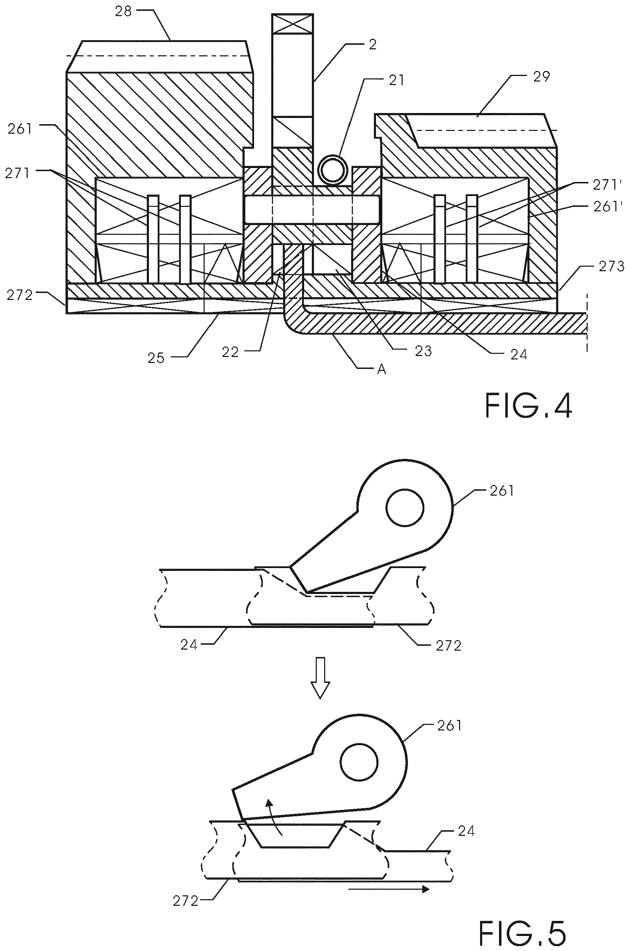

Referring to Figs. 2 and 4, it shows an embodiment, where it determines that a sun gear is fixed to an axial clutching control unit or a radial clutching control unit. In this the present invention, the structure is classified as an axial clutching form and a radial clutching form. Fig. 2 shows that a sun gear is fixed to or freely displacement with respect to the axial clutching control unit. Fig. 4 shows that a sun gear is fixed to or freely displacement with respect to the axial clutching control unit.

With reference to Figs. 2 and 3, the axial clutching control unit of the present invention is illustrated. The axial clutching control unit includes the following elements.

A center shaft 10 of the internal clutch 1 has at least one guide recess 101 for receiving a clutching driving rod.

An actuating sliding seat 25 is installed outside the center shaft 10. A surface of the sliding seat 25 is installed with a left gear 28, a ratchet ring 2 and a right gear 29. The ratchet gear ring 2 is installed between the left gear 28 and the right gear 29. Between the left gear 28 and the center shaft 10 is installed with a left spring base 201, a left sliding block returning spring 27 and a left actuating sliding block 26 which is resisted by the sliding block returning spring 27 and is controlled by the cam base 24. Between the right gear 29 and the center shaft 10 is installed with a right spring base 202, a right sliding block returning spring 27' and a right actuating sliding block 26' which is resisted by the sliding block returning spring 27 and is controlled by the cam base 24.

A cam base 24 is matched to the ratchet ring 2 and is installed with a first driving rod A. Movement of the cam base 24 will cause to drive one of a lift claw 22, a right claw 23 and a claw return spring 21.

With reference to Fig. 2, the operation of this embodiment will be described herein. Initially, the driving rod A of the axial clutching unit is at a left side. At this time, the left gear 28 is fixed and the right gear 29 is freely rotatable. When it is needed to change speed, the left gear 28 is switched to be rotatable freely and the right gear 29 is switched to be fixed.

The process is that: Firstly the driving rod A moves rightwards so that the left claw 22 is ejected upwards to engage to the ratchet ring 2 so as to drive the cam base 24 to rotate. When the cam base 24 rotates, an axial cam pushes the left actuating sliding block 26 to leave from the left gear 28 so that the left gear 28 is free. Then the left sliding block returning spring 27 is compressed so that the left actuating sliding block 26 is ejected by the cam base 24 to move leftwards further.

The cam base 24 rotates continuously so that the by the driving of the right sliding block returning spring 27', the right actuating sliding block 26' returns to right side. As a result, the right gear 29 is engaged with the right actuating sliding block 26'.

By above mentioned action as illustrated in Fig. 3, the driving rod A moves leftwards to the initial position as illustrated in Fig. 3.

With reference to Fig. 4, a cross sectional view about the radial clutching unit of the present invention is illustrated. In this embodiment, the main structure is like those described above, while the cam of the cam base 24 is radially moved. The left actuating sliding block 26 is changed to a left stop claw 261 and the right actuating sliding block 26' is changed to a right stop claw 261'. The left sliding returning spring 27 is changed to a left stop claw returning spring 271 and the right sliding returning spring 27' is changed to a right stop claw returning spring 271'. A left claw base 272 and a right claw base 273 are fixed to a surface of a center shaft 10. The operation of the stop claw 261 is identical to those illustrated in Fig. 5 and the operation principle is also like the above mentioned.

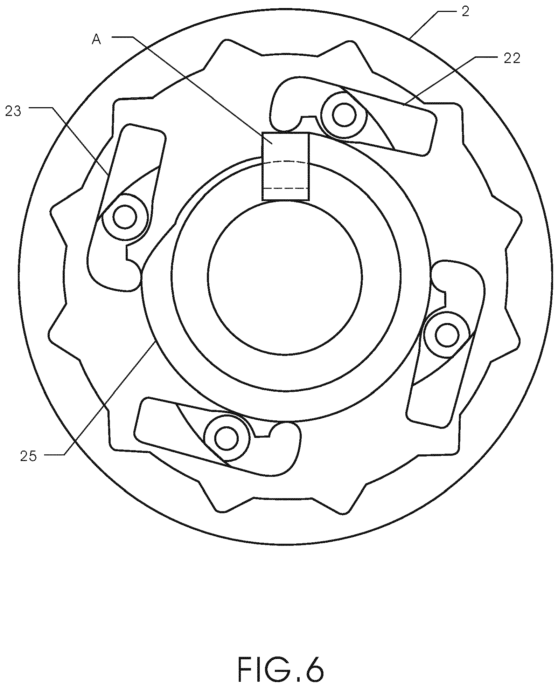

With reference to Figs. 1 and 6, the above mentioned control unit is performed by the fixedness of the sun gear. Since the fixedness of the ratchet ring 2 is by a rotation unit (such as an input ring, an inner gear, a planet frame, an output ring, etc. which rotates by changing gear). The function of the driving rod A serves to resist the claws 22, 23 not to engage with the ratchet ring 2. Therefore, it is not acted by input torque. Meanwhile, the left claw 22 and the right claw 23 are paired (as a two pair structure illustrated in Fig. 4) so that a 90 degree rotation causes an action. Therefore, the action is sequentially proceeded by a step for each time.

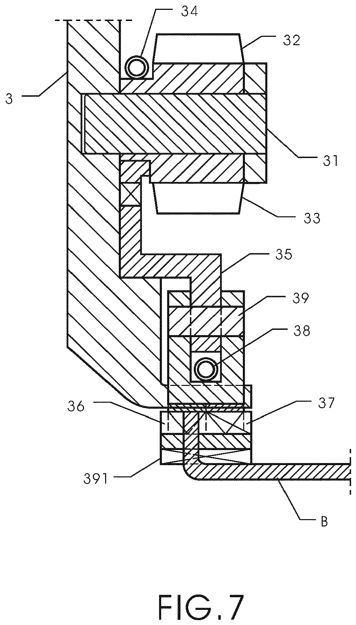

Referring to Fig. 7, the control unit for the inner gears at two sides and the planet frame according to the present invention is illustrated. By the position of the claws, the control is classified as two kinds. For one kind, the control claw is positioned at a linking device which is reacted with a power rotation unit. For another kind, the control claw is positioned a fixing unit. Fig. 7 shows an embodiment that the control claw is positioned on a linking device. The control unit includes the following elements.

For embodiment illustrated in Figs. 1 and 7, a driving rod B, a control claw actuating seat 391 and a rotation ring 3 are installed at an outer side of a center shaft of an internal clutch. An inner side of the rotation ring 3 is installed with a claw shaft 31 for being assembled to an upper planet power clutching claw 32, a lower planet power clutching claw 33 and a clutching claw returning spring 34. A ratchet claw control panel 35 is installed below the ratchet claw. A controlling claw shaft 39 is used to control the left control claw 36 and a right control claw 37 and control the claw returning spring 38. The object of the control unit serves to control the closing of the upper planet power ratchet claw 32. As illustrated in the drawing, initially, the driving rod B is at left side, at this moment, the upper planet ratchet claw 32 opens and the right control claw 37 closes.

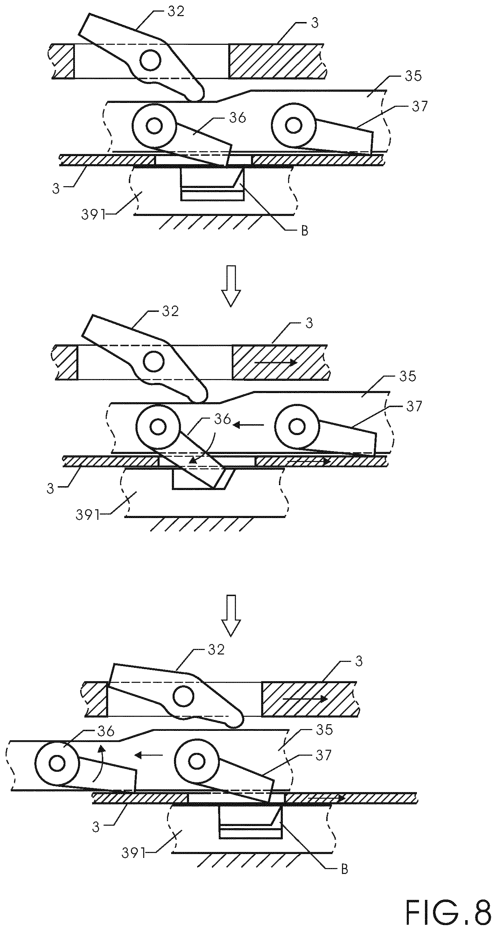

The action for closing the upper planet power ratchet claw 32 is that: the driving rod B moves transversally from a position locating the left control claw 36 to a position locating the right control claw 37 (referring to Fig. 8, the first and second steps). At this moment, the driving rod B does not support the left control claw 36 and is engaged with the control claw base 391 of the fixing unit. Therefore, the ratchet claw control panel 35 is fixed, even the ratchet claw control panel 35 rotates with respect to the rotation ring 3.

Rotation of the ratchet claw control panel 35 causes the upper planet power ratchet claw 32 closes. Then the left control claw 36 leaves by the action of the rotation ring 3, while the right control claw 37 moves to a notch to be supported by the driving rod B.

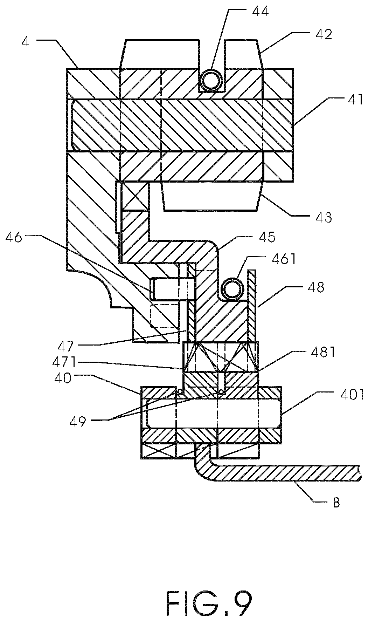

With reference to Fig. 9, an embodiment is illustrated. The third control unit has a control claw which is positioned on a fixing unit.

In this embodiment, a driving rod B, a control claw fixing base 40 are installed on outside of a center shaft of the internal clutch. A control claw shaft 401, a control claw returning spring 49, a left control claw 471 and a right control claw 481 are installed on the control claw fixing base 40. An upper planet power ratchet claw 42, a lower planet power ratchet claw 43 and a ratchet claw returning spring 44 are installed on the rotation claw 4. A ratchet claw control panel 45 is installed below the ratchet claw. A left limiting panel 47, a right limiting panel 48 and an auxiliary claw returning spring 461 are installed at two sides below the ratchet claw control panel 45.

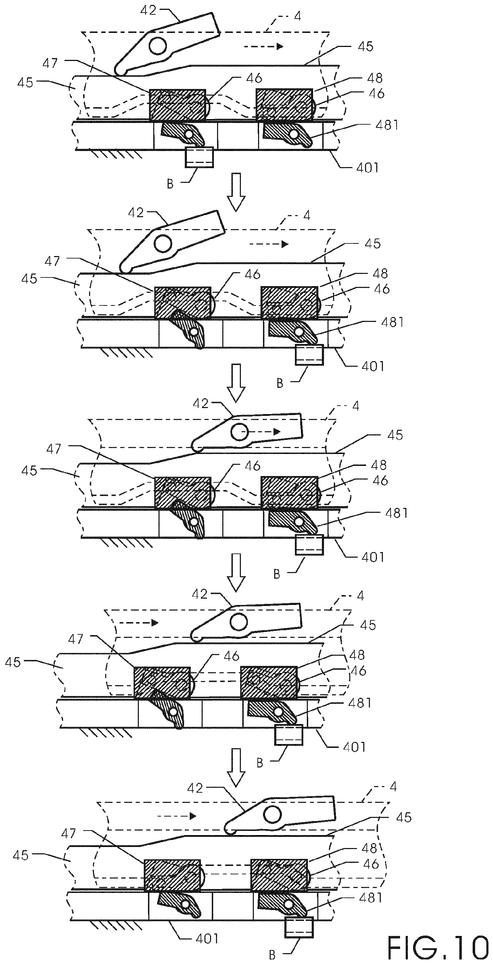

An auxiliary claw 46 is installed between the left control panel 47 and the rotation ring 4. As illustrated in the drawing, the control claw fixing base 40 and the rotation ring 4 are at initial positions. The driving rod B is at a left side and the left control claw is supported by the driving rod B. The ratchet claw control panel 45 is not engaged. At this time, the right control claw 481 is stopped by the auxiliary claw 46 and the right limiting panel 48 and cannot engage the ratchet claw control panel 45. Therefore, the ratchet claw control panel 45 is motionless and has no function of changing speed. When the driving rod B moves, it states to change speed. The operation is illustrated in Fig. 10.

Referring to Fig. 9, the driving rod B moves rightwards, and thus the left control claw 471 does not engage to the ratchet claw control panel 45 so that the ratchet claw control claw 45 cannot rotate.
As the rotation ring 4 rotates continuously so that the ratchet claw control panel 45 to control the cam of the upper planet power ratchet claw 42 to move leftwards. Therefore, the upper planet power ratchet claw 42 closes and to leave from the upper planet power ratchet claw 42.

After leaving from the upper planet power ratchet claw 42 and the rotation ring 4 rotates continuously. The auxiliary claw 46 is closed by the track of the rotation ring 4 so that the left control claw 47 returns to the leaving state. Then the driving rod B is at the right stop position to resist the right control claw 481 so as to complete a change speed action.

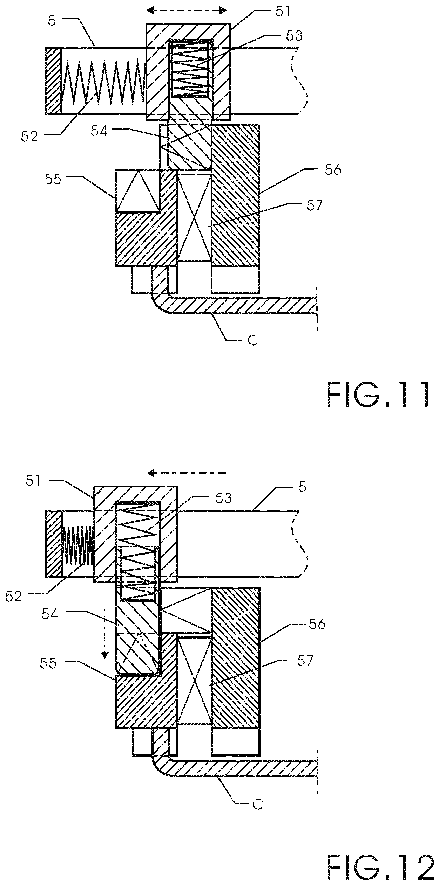

With reference to Fig. 11, an embodiment of the present invention is illustrated. It shows a control unit which is widely used to a radial clutching and axial clutching operation.

In this embodiment, a driving rod C, a radial control cam ring 55, an axial control cam ring 56 are installed on an outer side of a center shaft of the internal clutch. A spacing ring 57 is installed between the radial control cam ring 55 and the axial control cam ring 56. A power rotation unit 5 is installed with a sliding ring 51 which is used as a linking device. An axial spring 52 is installed between an outer side of the sliding ring 51 and the rotation unit 5. An interior of the sliding ring 51 is installed with a pin 54 and a radial spring 53. By the displacement of the sliding ring 51, the pin 54 is moved to be retained to the radial control cam ring 55 or to the axial control cam ring 56 so as to achieve the object of clutching of the radial clutching effect or axial clutching effect.

When the driving rod C moves to and retained at the radial control cam ring 55, the pin 54 originally positioned to the radial control cam ring 55 is ejected upwards. By the axial spring 52, the sliding ring 51 moves rightwards. Then the sliding ring 51 and the axial control cam ring 56 rotates with the rotation unit 5, as those shown in Fig. 11.

In summary, in the control unit of an internal clutch, by power rotating components (such as input rings, inner gears planet frames, output rings, etc.) which rotates as the internal clutch and cam or cam-like component, clutching components are controlled, such as to control the fixing of a sun gear, to control the engagements of the internal gear and planet gear. That is, using a cam or cam-like components to drive a driven device to rotate or displace so as to control the clutch to change gears

The present invention is thus described, it will be obvious that the same may be varied in many ways. The scope of the present invention, is defined by the following claims.

## Claims

1. A control assembly of an internal clutch comprising:
a first control unit (A) for controlling the fixedness of a sun gear (28,29);
a second control unit (B) for controlling engagements of inner gears at two sides and a planet frame;
a third control unit (C) for controlling the sun gear or the inner gears and the planet frame; and
wherein power for control units are from rotary dynamic components, by displacements of driving rods for controlling operations of a cam or cam-like component; by using the cam or cam-like unit to function clutch or by using the cam or cam-like unit to drive a driven device to rotate or displace for operation of the clutch, **characterized by** the first control unit is an axial clutching control unit and further comprising:
a center shaft (10) having at least one guide recess for receiving a clutching driving rod (A);
an actuating sliding seat (25) installed outside the center shaft (10); a surface of the sliding seat (25) being installed with a left gear (28), a ratchet ring (2) and a right gear (29); the ratchet gear ring (2) being installed between the left gear (28) and the right gear (29);
between the left gear (28) and the center shaft (10) being installed with a left spring base (201), a left sliding block returning spring (27) and a left actuating sliding block (26) which is resisted by the sliding block returning spring (27) and is controlled by the cam base (24); and
between the right gear (29) and the center shaft (10) being installed with a right spring base (202), a right sliding block returning spring (27') and a right actuating sliding block (26') which is resisted by the sliding block returning spring (27) and is controlled by the cam base (24).

2. A control assembly of an internal clutch comprising:a first control unit (A) for controlling the fixedness of a sun gear (28,29); a second control unit (B) for controlling engagements of inner gears at two sides and a planet frame; a third control unit (C) for controlling the sun gear or the inner gears and the planet frame; and wherein power for control units are from rotary dynamic components, by displacements of driving rods for controlling operations of a cam or cam-like component; by using the cam or cam-like unit to function clutch or by using the cam or cam-like unit to drive a driven device to rotate or displace for operation of the clutch, **characterized by** the first control unit is an axial clutching control unit and further comprising:
a center shaft (10) having at least one guide recess for receiving a clutching driving rod (A);
an actuating sliding seat installed outside the center shaft; a surface of the sliding seat being installed with a left gear (28), a ratchet ring (2) and a right gear (29); the ratchet ring (2) being installed between the left gear (28) and the right gear (29);
between the left gear (28) and the center shaft (10) being installed with a left spring base (201), a left stop claw returning spring (271) and a left stop claw (26) which is resisted by the stop claw returning spring and being controlled by the cam base (24); and
between the right gear (29) and the center shaft (10) being installed with a right spring base (202), a right stop claw returning spring (271') and a right stop claw (261') which is resisted by the stop claw returning spring and being controlled by the cam base (24); and
a left claw base (272) and a right claw base (273) being fixed to a surface of a shaft (10) center.

3. The control assembly of an internal clutch as claimed in claim 1 or 2, wherein displacement of the driving rod is one of a transversal displacement, a vertical displacement, and an angular displacement.

4. The control assembly of an internal clutch as claimed in claim 1 or 2, wherein the second control unit serves to control opening or closing of a ratchet claw on the planet frame; and the second control unit controls the ratchet claw to a rotation linking device or to control the ratchet claw to a fixed device.

5. The control assembly of an internal clutch as claimed in claim 4, wherein for the second control unit controlling the ratchet claw to a rotation linking device, second control unit comprising:
a driving rod (B);
a control claw actuating seat (391) and a rotation ring (3) being installed at an outer side of a center shaft (10) of an internal clutch; and
an inner side of the rotation ring (3) being installed with a claw shaft (31) for assembled to an upper planet power clutching claw (32), a lower planet power clutching claw (33) and a clutching claw returning spring (34); and
a ratchet claw control panel (35) being installed below the ratchet claw; a controlling claw shaft (39) being used to control the left control claw (36) and a right control claw (37) and control the claw returning spring (38).

6. The control assembly of an internal clutch as claimed in claim 4, wherein for the second control unit controlling the ratchet claw to be positioned on a fixing unit, the second control unit comprising:
a driving rod (B);
a control claw fixing base (40) installed on outside of a center shaft (10) of the internal clutch (1);
a control claw shaft (401), a control claw returning spring (49), a left control claw (471) and a right control claw (481) installed on the control claw fixing base (40);
an upper planet power ratchet claw (42), a lower planet power ratchet claw (43) and a ratchet claw returning spring (44) installed on the rotation claw (4);
a ratchet claw control panel (45) installed below the ratchet claw;
a left limiting panel (47), a right limiting panel 48 and an auxiliary claw returning spring (461) installed at two side below the ratchet claw control panel (45); and
an auxiliary claw (46) installed between the left control panel (47) and the rotation ring (4).

7. The control assembly of an internal clutch as claimed in claim 4, wherein the third control unit comprising:
a third driving rod (C), a radial control cam ring (55), an axial control cam ring (56) installed on an outer side of a center shaft of the internal clutch;
a spacing ring (57) installed between the radial control cam ring (55) and the axial control cam ring (56);
a power rotation unit (5) installed with a sliding ring (51) which is used as a linking device;
an axial spring (52) installed between an outer side of the sliding ring (51) and the rotation unit (5); an interior of the sliding ring (51) being installed with a pin (54) and a radial spring (53).

8. The control assembly of an internal clutch as claimed in claim 7, wherein by displacement of the sliding ring (51), the pin (54) is moved to be retained to the radial control cam ring (55) or to the axial control cam ring (56) so as to achieve the object of clutching radially or axially.

## Patentansprüche

1. Steuerungsanordnung einer internen Kupplung, die Folgendes umfasst:
eine erste Steuereinheit (A) zum Steuern der Fixiertheit eines Sonnenrads (28, 29);
eine zweite Steuereinheit (B) zum Steuern der Eingriffe von inneren Zahnrädern auf zwei Seiten und eines Planetenrahmens;
eine dritte Steuereinheit (C) zum Steuern des Sonnenrads oder der inneren Zahnräder und des Planetenrahmens; und
wobei Kraft für Steuereinheiten von drehenden dynamischen Komponenten herrührt, durch Verschiebungen von Antriebsstangen zum Steuern von Vorgängen eines Nockens oder einer nockenartigen Komponente; durch Verwenden des Nockens oder der nockenartigen Einheit zum Betätigen der Kupplung oder durch Verwenden des Nockens oder der nockenartigen Einheit zum Antreiben einer angetriebenen Vorrichtung zum Drehen oder Verschieben zum Betätigen der Kupplung, **dadurch gekennzeichnet, dass** es sich bei der ersten Steuereinheit um eine axiale Kupplungssteuereinheit handelt, und weiter umfassend:
eine mittlere Achse (10) mit mindestens einer Führungsaussparung zum Aufnehmen einer Kupplungsantriebsstange (A);
einen Betätigungs-Gleitsitz (25), der außerhalb der mittleren Achse (10) installiert ist; wobei eine Oberfläche des Gleitsitzes (25) mit einem linken Zahnrad (28), einem Ratschenhohlrad (2) und einem rechten Zahnrad (29) installiert ist; wobei das Ratschenhohlrad (2) zwischen dem linken Zahnrad (28) und dem rechten Zahnrad (29) installiert ist;
wobei zwischen dem linken Zahnrad (28) und der mittleren Achse (10) eine linke Federbasis (201), eine linke Gleitklotz-Rückstellfeder (27) und ein linker Betätigungs-Gleitklotz (26), dem von der Gleitklotz-Rückstellfeder (27) widerstanden wird und der von der Nockenbasis (24) gesteuert wird, installiert sind; und
wobei zwischen dem rechten Zahnrad (29) und der mittleren Achse (10) eine rechte Federbasis (202), eine rechte Gleitklotz-Rückstellfeder (27') und ein rechter Betätigungs-Gleitklotz (26'), dem von der Gleitklotz-Rückstellfeder (27) widerstanden wird und der von der Nockenbasis (24) gesteuert wird, installiert sind.

2. Steuerungsanordnung einer internen Kupplung, die Folgendes umfasst:
eine erste Steuereinheit (A) zum Steuern der Fixiertheit eines Sonnenrads (28, 29);
eine zweite Steuereinheit (B) zum Steuern der Eingriffe von inneren Zahnrädern auf zwei Seiten und eines Planetenrahmens;
eine dritte Steuereinheit (C) zum Steuern des Sonnenrads oder der inneren Zahnräder und des Planetenrahmens; und
wobei Kraft für Steuereinheiten von drehenden dynamischen Komponenten herrührt, durch Verschiebungen von Antriebsstangen zum Steuern von Vorgängen eines Nockens oder einer nockenartigen Komponente; durch Verwenden des Nockens oder der nockenartigen Einheit zum Betätigen der Kupplung oder durch Verwenden des Nockens oder der nockenartigen Einheit zum Antreiben einer angetriebenen Vorrichtung zum Drehen oder Verschieben zum Betätigen der Kupplung, **dadurch gekennzeichnet, dass** es sich bei der ersten Steuereinheit um eine axiale Kupplungssteuereinheit handelt, und weiter umfassend:
eine mittlere Achse (10) mit mindestens einer Führungsaussparung zum Aufnehmen einer Kupplungsantriebsstange (A);
einen Betätigungs-Gleitsitz, der außerhalb der mittleren Achse installiert ist; wobei eine Oberfläche des Gleitsitzes mit einem linken Zahnrad (28), einem Ratschenhohlrad (2) und einem rechten Zahnrad (29) installiert ist; wobei das Ratschenhohlrad (2) zwischen dem linken Zahnrad (28) und dem rechten Zahnrad (29) installiert ist;
wobei zwischen dem linken Zahnrad (28) und der mittleren Achse (10) eine linke Federbasis (201), eine linke Sperrklauen-Rückstellfeder (271) und eine linke Sperrklaue (26), der von der Sperrklauen-Rückstellfeder widerstanden wird und die von der Nockenbasis (24) gesteuert wird, installiert sind; und
wobei zwischen dem rechten Zahnrad (29) und der mittleren Achse (10) eine rechte Federbasis (202), eine rechte Sperrklauen-Rückstellfeder (271') und eine rechte Sperrklaue (261'), der von der Sperrklauen-Rückstellfeder widerstanden wird und die von der Nockenbasis (24) gesteuert wird, installiert sind; und
eine linke Klauenbasis (272) und eine rechte Klauenbasis (273), die an der Oberfläche einer mittleren Achsen (10) befestigt sind.

3. Steuerungsanordnung einer internen Kupplung nach Anspruch 1 oder 2, wobei es sich bei der Verschiebung der Antriebsstange um eine von einer Verschiebung in Querrichtung, einer vertikalen Verschiebung und einer Winkelverschiebung handelt.

4. Steuerungsanordnung einer internen Kupplung nach Anspruch 1 oder 2, wobei die zweite Steuereinheit dazu dient, das Öffnen oder Schließen einer Ratschenklaue an dem Planetenrahmen zu steuern; und die zweite Steuereinheit die Ratschenklaue zu einer Drehkopplungsvorrichtung oder zum Steuern der Ratschenklaue zu einer feststehenden Vorrichtung steuert.

5. Steuerungsanordnung einer internen Kupplung nach Anspruch 4, wobei dazu, dass die zweite Steuereinheit die Ratschenklaue zu einer Drehkopplungsvorrichtung steuert, die zweite Steuereinheit Folgendes umfasst:
eine Antriebsstange (B);
einen Steuerklauen-Betätigungssitz (391) und einen Drehring (3), die an einer Außenseite einer mittleren Achse (10) einer internen Kupplung installiert sind; und
wobei eine Innenseite des Drehrings (3) mit einer Klauenachse (31) zur Montage an einer oberen Planetenkraft-Kupplungsklaue (32), einer unteren Planetenkraft-Kupplungsklaue (33) und einer Kupplungsklauen-Rückstellfeder (34) installiert ist; und
wobei eine Ratschenklauen-Steuerplatte (35) unter der Ratschenklaue installiert ist; wobei eine Steuerklauenachse (39) verwendet wird, um die linke Steuerklaue (36) und eine rechte Steuerklaue (37) zu steuern und die Klauen-Rückstellfeder (38) zu steuern.

6. Steuerungsanordnung einer internen Kupplung nach Anspruch 4, wobei dazu, dass die zweite Steuereinheit die Ratschenklaue dazu steuert, auf einer Fixierungseinheit positioniert zu werden, die zweite Steuereinheit Folgendes umfasst:
eine Antriebsstange (B);
eine Steuerklauen-Fixierungsbasis (40), die auf dem Äußeren einer mittleren Achse (10) der internen Kupplung (1) installiert ist;
eine Steuerklauenachse (401), eine Steuerklauen-Rückstellfeder (49), eine linke Steuerklaue (471) und eine rechte Steuerklaue (481), die auf der Steuerklauen-Befestigungsbasis (40) installiert sind;
eine obere Planetenkraft-Ratschenklaue (42), eine untere Planetenkraft-Ratschenklaue (43) und eine Ratschenklauen-Rückstellfeder (44), die an der Drehklaue (4) installiert sind;
eine Ratschenklauen-Steuerplatte (45), die unter der Ratschenklaue installiert ist;
eine linke Begrenzungsplatte (47), eine rechte Begrenzungsplatte (48) und eine Hilfsklauen-Rückstellfeder (461), die auf zwei Seiten unter der Ratschenklauen-Steuerplatte (45) installiert sind; und
eine Hilfsklaue (46), die zwischen der linken Steuerplatte (47) und dem Drehring (4) installiert ist.

7. Steuerungsanordnung für eine interne Kupplung nach Anspruch 4, wobei die dritte Steuereinheit Folgendes umfasst:
eine dritte Antriebsstange (C), einen Radialsteuernockenring (55), einen Axialsteuernockenring (56), die an einer Außenseite einer mittleren Achse der internen Kupplung installiert sind;
einen Distanzring (57), der zwischen dem Radialsteuernockenring (55) und dem Axialsteuernockenring (56) installiert ist;
eine Kraftdreheinheit (5), die mit einem Gleitring (51) installiert ist, der als Kopplungsvorrichtung verwendet wird;
eine Axialfeder (52), die zwischen einer Außenseite des Gleitrings (51) und der Dreheinheit (5) installiert ist; wobei ein Inneres des Gleitrings (51) mit einem Stift (54) und einer Radialfeder (53) installiert ist.

8. Steuerungsanordnung einer internen Kupplung nach Anspruch 7, wobei durch die Verschiebung des Gleitrings (51) der Stift (54) bewegt wird, um an dem Radialsteuernockenring (55) oder an dem Axialsteuernockenring (56) gehalten zu werden, um die Aufgabe des radialen oder axialen Kuppelns zu erfüllen.

## Revendications

1. Ensemble de commande d'un embrayage interne, comportant :
une première unité de commande (A) servant à commander la fixité d'une roue solaire (28, 29) ;
une deuxième unité de commande (B) servant à commander des mises en prise d'engrenages intérieurs au niveau de deux côtés et d'un cadre planétaire ;
une troisième unité de commande (C) servant à commander la roue solaire ou les engrenages intérieurs et le cadre planétaire ; et
dans lequel la puissance pour les unités de commande provient de composants dynamiques rotatifs, par des déplacements de bielles d'entraînement servant à commander des opérations d'un composant formant came ou similaire à une came ; par l'utilisation d'une unité formant came ou similaire à une came servant à faire fonctionner l'embrayage ou par l'utilisation de l'unité formant came ou similaire à une came servant à entraîner un dispositif entraîné à des fins de rotation ou de déplacement pour le fonctionnement de l'embrayage, **caractérisé en ce que** la première unité de commande est une unité de commande d'actionnement d'embrayage axial et comportant par ailleurs :
un arbre central (10) ayant au moins un évidement de guidage servant à recevoir une bielle d'entraînement d'actionnement d'embrayage (A) ;
un siège coulissant d'actionnement (25) installé à l'extérieur de l'arbre central (10) ; une surface du siège coulissant (25) étant installée avec un engrenage gauche (28), une bague à cliquet (2) et un engrenage droit (29) ; la bague d'engrenage à cliquet (2) étant installée entre l'engrenage gauche (28) et l'engrenage droit (29) ;
entre l'engrenage gauche (28) et l'arbre central (10) étant installés, avec une base de ressort gauche (201), un ressort de retour de bloc coulissant gauche (27) et un bloc coulissant d'actionnement gauche (26) contre quoi vient résister le ressort de retour de bloc coulissant (27) et que commande la base de came (24) ; et
entre l'engrenage droit (29) et l'arbre central (10) étant installés, avec une base de ressort droite (202), un ressort de retour de bloc coulissant droit (27') et un bloc coulissant d'actionnement droit (26') contre quoi vient résister le ressort de retour de bloc coulissant (27) et que commande la base de came (24).

2. Ensemble de commande d'un embrayage interne, comportant : une première unité de commande (A) servant à commander la fixité d'une roue solaire (28, 29) ; une deuxième unité de commande (B) servant à commander des mises en prise d'engrenages intérieurs au niveau de deux côtés et d'un cadre planétaire ; une troisième unité de commande (C) servant à commander la roue solaire ou les engrenages intérieurs et le cadre planétaire ; et dans lequel la puissance pour les unités de commande provient de composants dynamiques rotatifs, par des déplacements de bielles d'entraînement servant à commander des opérations d'un composant formant came ou similaire à une came ; par l'utilisation d'une unité formant came ou similaire à une came servant à faire fonctionner l'embrayage ou par l'utilisation de l'unité formant came ou similaire à une came servant à entraîner un dispositif entraîné à des fins de rotation ou de déplacement pour le fonctionnement de l'embrayage, **caractérisé en ce que** la première unité de commande est une unité de commande d'actionnement d'embrayage axial et comportant par ailleurs :
un arbre central (10) ayant au moins un évidement de guidage servant à recevoir une bielle d'entraînement d'actionnement d'embrayage (A) ;
un siège coulissant d'actionnement installé à l'extérieur de l'arbre central ; une surface du siège coulissant étant installée avec un engrenage gauche (28), une bague à cliquet (2) et un engrenage droit (29) ; la bague à cliquet (2) étant installée entre l'engrenage gauche (28) et l'engrenage droit (29) ;
entre l'engrenage gauche (28) et l'arbre central (10) étant installés, avec une base de ressort gauche (201), un ressort de retour de griffe d'arrêt gauche (271) et une griffe d'arrêt gauche (26) contre quoi vient résister le ressort de retour de griffe d'arrêt et que commande la base de came (24) ; et
entre l'engrenage droit (29) et l'arbre central (10) étant installés, avec une base de ressort droite (202), un ressort de retour de griffe d'arrêt droit (271') et une griffe d'arrêt droite (261') contre quoi vient résister le ressort de retour de griffe d'arrêt et que commande la base de came (24) ; et
une base de griffe gauche (272) et une base de griffe droite (273) qui sont fixées sur une surface d'un centre d'un arbre (10).

3. Ensemble de commande d'un embrayage interne selon la revendication 1 ou la revendication 2, dans lequel tout déplacement de la bielle d'entraînement est l'un parmi un déplacement transversal, un déplacement vertical, et un déplacement angulaire.

4. Ensemble de commande d'un embrayage interne selon la revendication 1 ou la revendication 2, dans lequel la deuxième unité de commande sert à commander l'ouverture ou la fermeture d'une griffe à cliquet sur le cadre planétaire ; et la deuxième unité de commande sert à commander la griffe à cliquet jusque sur un dispositif de liaison de rotation ou à commander la griffe à cliquet jusque sur un dispositif fixe.

5. Ensemble de commande d'un embrayage interne selon la revendication 4, dans lequel, pour la deuxième unité de commande servant à commander la griffe à cliquet jusque sur un dispositif de liaison de rotation, la deuxième unité de commande comporte :
une bielle d'entraînement (B) ;
un siège d'actionnement de griffe de commande (391) et une bague de rotation (3) qui sont installés au niveau d'un côté extérieur d'un arbre central (10) d'un embrayage interne ; et
un côté intérieur de la bague de rotation (3) qui est installé avec un arbre de griffe (31) à des fins d'assemblage sur une griffe d'actionnement d'embrayage de puissance planétaire supérieure (32), une griffe d'actionnement d'embrayage de puissance planétaire inférieure (33) et un ressort de retour de griffe d'actionnement d'embrayage (34) ; et
un panneau de commande de griffe à cliquet (35) qui est installé sous la griffe à cliquet ; un arbre de griffe de commande (39) qui est utilisé pour commander la griffe de commande gauche (36) et une griffe de commande droite (37) et pour commander le ressort de retour de griffe (38).

6. Ensemble de commande d'un embrayage interne selon la revendication 4, dans lequel, pour la deuxième unité de commande servant à commander la griffe à cliquet à des fins de positionnement sur une unité de fixation, la deuxième unité de commande comporte :
une bielle d'entraînement (B) ;
une base de fixation de griffe de commande (40) installée sur une partie extérieure d'un arbre central (10) de l'embrayage interne (1) ;
un arbre de griffe de commande (401), un ressort de retour de griffe de commande (49), une griffe de commande gauche (471) et une griffe de commande droite (481) installés sur la base de fixation de griffe de commande (40) ;
une griffe à cliquet de puissance planétaire supérieure (42), une griffe à cliquet de puissance planétaire inférieure (43) et un ressort de retour de griffe à cliquet (44) installés sur la griffe de rotation (4) ;
un panneau de commande de griffe à cliquet (45) installé sous la griffe à cliquet ;
un panneau de limitation gauche (47), un panneau de limitation droit (48) et un ressort de retour de griffe auxiliaire (461) installés au niveau de deux côtés sous le panneau de commande de griffe à cliquet (45) ; et
une griffe auxiliaire (46) installée entre le panneau de commande gauche (47) et la bague de rotation (4).

7. Ensemble de commande d'un embrayage interne selon la revendication 4, dans lequel la troisième unité de commande comporte :
une troisième bielle d'entraînement (C), une bague de came de commande radiale (55), une bague de came de commande axiale (56) installées sur un côté extérieur d'une arbre central de l'embrayage interne ;
une bague d'espacement (57) installée entre la bague de came de commande radiale (55) et la bague de came de commande axiale (56) ;
une unité de rotation de puissance (5) installée avec une bague coulissante (51) qui est utilisée pour tenir lieu de dispositif de liaison ;
un ressort axial (52) installé entre un côté extérieur de la bague coulissante (51) et l'unité de rotation (5) ; une partie intérieure de la bague coulissante (51) étant installée avec une broche (54) et un ressort radial (53).

8. Ensemble de commande d'un embrayage interne selon la revendication 7, dans lequel, par tout déplacement de la bague coulissante (51), la broche (54) est déplacée à des fins de retenue sur la bague de came de commande radiale (55) ou sur la bague de came de commande axiale (56) de manière réaliser l'objet de l'actionnement d'embrayage dans le sens radial ou dans le sens axial.
